# EUROPEAN PATENT SPECIFICATION

(11) **EP 3 237 961 B1**
(45) Date of publication and mention of the grant of the patent: **25.08.2021**
(21) Application number: 15831163.9
(22) Date of filing: 23.12.2015
(51) Int. Cl.: F21V 8/00, G02B 6/00, G02B 27/01

(54) **METHOD FOR FABRICATING A SUBSTRATE-GUIDED OPTICAL DEVICE**
VERFAHREN ZUR HERSTELLUNG EINER SUBSTRATGEFÜHRTEN OPTISCHEN VORRICHTUNG
PROCÉDÉ DE FABRICATION D'UN DISPOSITIF OPTIQUE GUIDÉ PAR UN SUBSTRAT

(30) Priority: 25.12.2014 IL 23649114
(43) Date of publication of application: 01.11.2017
(73) Proprietor: Lumus Ltd, 7670502 Rehovot (IL)
(72) Inventor: OFIR, Yuval, 7313400 Kfar HaOranim (IL); FRIEDMANN, Edgar, 8471624 Be'er Sheva (IL); AMITAI, Yaakov, 7622924 Rehovot (IL)
(74) Representative: Kancelaria Eupatent.pl Sp. z.o.o
(86) International application number: PCT/IL2015/051247
(87) International publication number: WO 2016/103263

(56) References cited:
- WO-A1-2006/013565
- WO-A1-2006/085309
- WO-A1-2007/054928
- US-A1- 2005 174 641
- US-B1- 6 322 256
- DA-YONG QIAO ET AL: "A continuous-membrane micro deformable mirror based on anodic bonding of SOI to glass wafer", MICROSYSTEM TECHNOLOGIES ; MICRO AND NANOSYSTEMS INFORMATION STORAGE AND PROCESSING SYSTEMS, SPRINGER, BERLIN, DE, vol. 16, no. 10, 20 May 2010 (2010-05-20), pages 1765-1769, XP019851629, ISSN: 1432-1858

## Description

### FIELD OF THE INVENTION

The present invention relates to substrate-guided optical devices, and particularly to devices which include a plurality of reflecting surfaces carried by a common light-transmissive substrate, also referred to as a light-guide element.

The invention can be implemented to advantage in a large number of imaging applications, such as portable DVDs, cellular phone, mobile TV receiver, video games, portable media players or any other mobile display devices.

### BACKGROUND OF THE INVENTION

An important application for compact optical elements is in head-mounted displays (HMDs), wherein an optical module serves both as an imaging lens and a combiner, in which a two-dimensional image source is imaged to infinity and reflected into the eye of an observer. The display source can be directly obtained from either a spatial light modulator (SLM) such as a cathode ray tube (CRT), a liquid crystal display (LCD), an organic light emitting diode array (OLED), a scanning source or similar devices, or indirectly, by means of a relay lens or an optical fiber bundle. The display source comprises an array of elements (pixels) imaged to infinity by a collimating lens and transmitted into the eye of the viewer by means of a reflecting or partially reflecting surface acting as a combiner for non-see-through and see-through applications, respectively. Typically, a conventional, free-space optical module is used for these purposes. As the desired field-of-view (FOV) of the system increases, however, such a conventional optical module becomes larger, heavier and bulkier, and therefore, even for a moderate performance device, is impractical. This is a major drawback for all kinds of displays and especially in head-mounted applications, wherein the system should necessarily be as light and as compact as possible.

The strive for compactness has led to several different complex optical solutions, all of which, on the one band, are still not sufficiently compact for most practical applications and, on the other band, suffer major drawbacks in terms of manufacturability. Furthermore, the eye-motion-box (EMB) of the optical viewing angles resulting from these designs is usually very small - typically less than 8 mm.

Hence, the performance of the optical system is very sensitive, even for small movements of the optical system relative to the eye of the viewer, and does not allow sufficient pupil motion for comfortable reading of text from such displays.

The teachings included in Publication Nos. WO01/95027, WO03/081320, WO2005/024485, WO2005/02449 I, WO2005/024969, WO2005/I 24427, WO2006/013565, WO2006/085309, WO2006/085310, WO2006/087709, WO2007 /054928, WO2007 /093983, WO2008/023367, WO2008/129539, WO2008/149339, WO2013/175465, IL 232197 and IL 235642, all in the name of Applicant pertain to the prior art. WO 2007/054928 for example discloses an optical device with a flat light-transmitting substrate having at least two major surfaces and edges. This substrate comprises a first reflecting surface, which is illuminated by collimated light waves, emanating from a display source located behind the device. The reflecting surface reflects the incident light from the source such that the light is trapped inside the planar substrate by total internal reflection. After several reflections from the surfaces of the substrate, the trapped waves reach an array of selectively reflecting surfaces, which couple the light out of the substrate into the eye of a viewer. When fabricating the optical device, a group of parallel plates and an associated group of partially reflecting surfaces (coated onto these plates) are manufactured, to required dimensions. The plates can be fabricated from silicate-based materials such as BK-7 with the conventional techniques of grinding and polishing, or alternatively, they can be made from polymer or sol-gel materials using injection-molding or casting techniques. Next, a blank plate, the coated plates and a plate having a reflecting surface are cemented together to create a stacked form. A segment is then sliced off the stacked form by cutting, grinding and polishing, to create the desired light-guide optical element.

### SUMMARY OF THE INVENTION

The present invention facilitates the exploitation of very compact light-guide optical element (LOE) for, amongst other applications, HMDs. The invention allows relatively wide FOVs together with relatively large EMB values. The resulting optical system offers a large, high-quality image, which also accommodates large movements of the eye. The optical system offered by the present invention is particularly advantageous because it is substantially more compact than state-of-the-art implementations and yet it can be readily incorporated, even into optical systems having specialized configurations.

A broad object of the present invention is therefore to alleviate the drawbacks of prior art compact optical display devices and to provide other optical components and systems having improved pe1formance, according to specific requirements.

The main physical principle of the LOE's operation is that light waves are trapped inside the substrate by total internal reflections from the external surfaces of the LOE. In addition, the light waves which are trapped inside the LOE are coupled out into the eyes of the viewer by an array of partially reflecting surfaces. Therefore, in order to achieve an undistorted image having good optical quality it is important that the on one hand the quality of the external as well as the partially reflecting surfaces will be with high quality and on the other hand that the fabrication process of the LOE will be as simple and straightforward as possible.

The invention therefore provides a method for fabricating an optical device comprising a light waves-transmitting substrate having at least two major surfaces and edges and a plurality of partially reflecting surfaces carried by the substrate, wherein the partially reflecting surfaces are parallel to each other and not parallel to any of the edges of the substrate, the method comprising: providing at least one transparent flat plate and plates having partially reflecting surfaces, optically attaching together the flat plates so as to create a stacked, staggered form, slicing off from the stacked, staggered form at least one segment by cutting across several plates, grinding and polishing the segment to produce the light waves-transmitting substrate, characterized in that the plates are optically attached to each other by an optically adhesive-free process, and in that the light waves-transmitting substrate is chemically strengthened by a surface finishing process. The invention furthermore provides an optical device comprising: a light waves-transmitting substrate having at least two major surfaces and edges and a plurality of partially reflecting surfaces carried by the substrate, wherein the partially reflecting surfaces are parallel to each other and not parallel to any of the edges of the substrate, characterised in that the light waves-transmitting substrate is formed from at least one transparent flat plate and a plurality of plates having partially reflecting surfaces optically attached to each other by an optically adhesive-free process, and in that the light waves-transmitting substrate is chemically strengthened by a surface finishing process.

### BRIEF DESCRIPTION OF THE DRAWINGS

The invention is described in connection with certain preferred embodiments, with reference to the following illustrative figures so that it may be more fully understood.

With specific reference to the figures in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention. The description taken with the drawings are to serve as direction to those skilled in the art as to how the several forms of the invention may be embodied in practice.

### In the drawings:

Fig. 1 is a side view of an exemplary, prior art, LOE;
Fig. 2 is a diagram illustrating steps (a) to (e) of a method for fabricating an array of partially reflecting surfaces, according to the present invention;
**Fig. 3** is a schematic diagram illustrating steps (a) to (c) of a method to increase the number of LOEs which can be fabricated out of a single slice according to the present invention;
**Fig. 4** is a diagram illustrating steps (a) to (e) of an embodiment of another method for fabricating an array of partially reflecting surfaces, according to the present invention;
**Fig. 5** is a diagram illustrating steps (a) and (b) of a method to attach a blank plate at the edge of the LOE;
**Fig. 6** illustrates a span of optical rays illuminating the input aperture of an LOE, wherein one of the edges of the LOE is slanted at an oblique angle with respect to the major surfaces, in accordance with the present invention;
**Fig. 7** is a schematic diagram illustrating a system coupling-in input light-waves from a display light source into a substrate, wherein an intermediate prism is attached to the slanted edge of the LOE, in accordance with the present invention, and
**Fig. 8** is a diagram illustrating steps (a) to (c) of a method for fabricating an LOE having a slanted edge, according to the present invention;

### DETAILED DESCRIPTION OF EMBODIMENTS

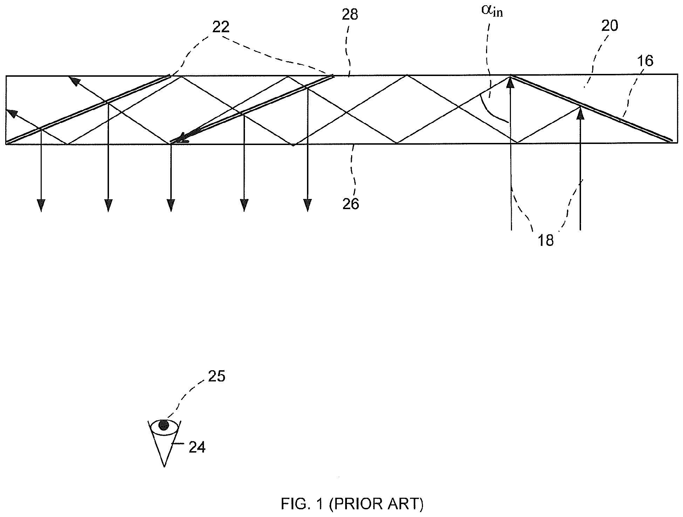

Fig. 1 illustrates a sectional view of a prior art substrate 20 and associated components (hereinafter also "an LOE"), utilizable in the present invention. An optical means, e.g., a reflecting surface 16, is illuminated by a collimated display light waves 18, emanating from a light source (not shown). The reflecting surface 16 reflects incident light waves from the source, such that the light waves are trapped inside a planar substrate 20 of the LOE, by total internal reflection. After several reflections off the major lower and upper surfaces 26, 28 of the substrate 20, the trapped light waves reach an array of selective reflecting surfaces 22, which couple the light out of the substrate into an eye 24, having a pupil 25, of a viewer. Herein, the input surface of the LOE will be regarded as the surface through which the input light waves enter the LOE and the output surface of the LOE will be regarded as the surface through which the trapped light waves exit the LOE. In the case of the LOE illustrated in Fig. 1, both the input and the output surfaces are on the lower surface 26. Other configurations, however, are envisioned in which the input and the image light waves could be located on opposite sides of the substrate 20, or when the light waves are coupled into the LOE through a slanted edge of the substrate.

As illustrated in Fig. 1, the light waves are trapped inside the substrate by total internal reflections from the two major surfaces 26 and 28 of the substrate 20. In order to maintain the original direction of the coupled light waves to avoid double images, it is crucial that the parallelism between the major surfaces 26 and 28 will be to a high degree. In addition, the light waves which are trapped inside the LOE are coupled out into the eyes of the viewer by an array of partially reflecting surfaces 22. As a result, the parallelism of these surfaces should also be as high as possible. Furthermore, to achieve an undistorted image having good optical quality and to avoid scattering and optical noise, it is important that the surface quality of the external surfaces of the substrate, as well as the partially reflecting surfaces, will be very high. On the other hand, it is also important that the fabrication process of the LOE will be as simple and straightforward as possible.

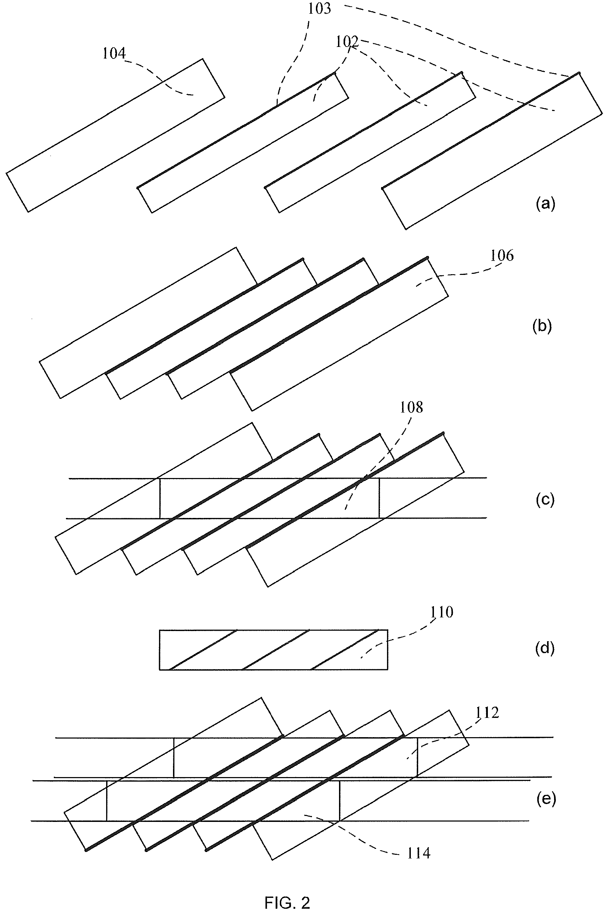

A possible method to fabricate an LOE is illustrated in Fig. 2. (a) A plurality of transparent flat plates 102 coated with required partially reflecting coatings 103 and a non-coated flat plate 104, are optically attached together so as to create a stacked form 106, see step (b). A segment 108, step (c), is then sliced off the stacked form by cutting, grinding and polishing, to create the desired LOE 110 (d). Several LOE elements 112 and 114 can be sliced off from the stacked form, as shown in (e). The number of the LOE elements that can be sliced off the stack can be maximized by a proper staggering of the plates in the stack.

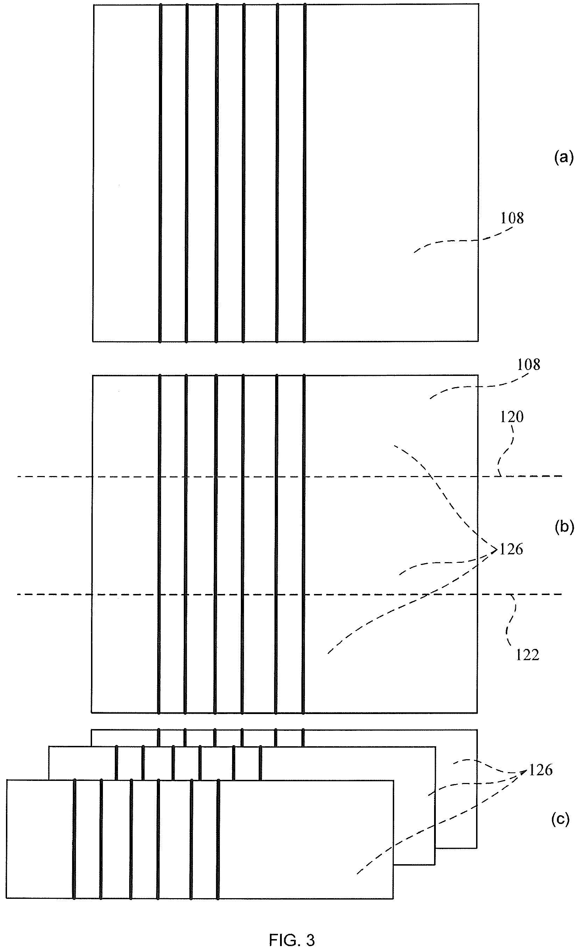

Another method to increase the number of the final elements is illustrated in Figs. 3A to 3C. A top view of the sliced LOE 108 is shown in Fig. 3(a). The slice is then cut along the lines 120 and 122 to create three similar sub-segments Fig. 3(b). These sliced segments are then processed by cutting, grinding and polishing, to create three similar LOEs 126 Fig. 3(c).

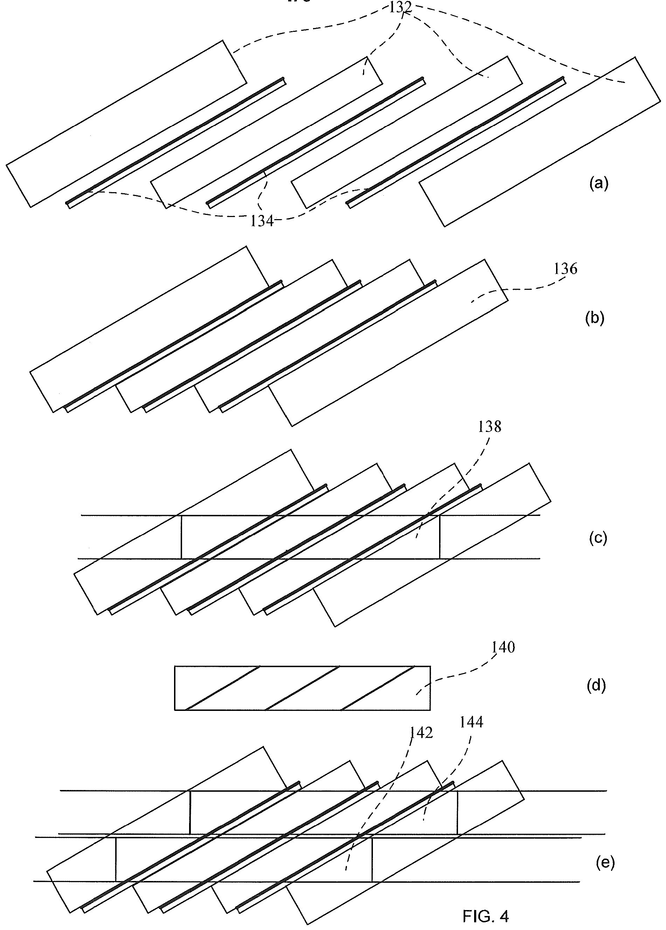

An alternative method to produce the LOE is illustrated in Figs. 4(a) to 4(e). Instead of coating the selected partially reflecting coatings on the surfaces of the blank plates 132 the reflecting surfaces are prepared on an array of thin plates 134. In addition to thin-film dielectric coating, the reflecting mechanism here can be an anisotropic polarizing-sensitive reflection such as from wire-grid array, or DBEF films. Fig. 4(a) shows the blank plates 132 and the plates 134 with the reflecting surfaces alternately optically attached together so as to create a stacked form 136 see Fig. 4(b). A segment 138 Fig. 4(c) is then sliced off the stacked form by cutting, is finished by grinding and polishing, to create the desired LOE 140, as shown in Fig. 4(d). Several elements 142 and 144 illustrated in Fig. 4(e) can be sliced off from this stacked form.

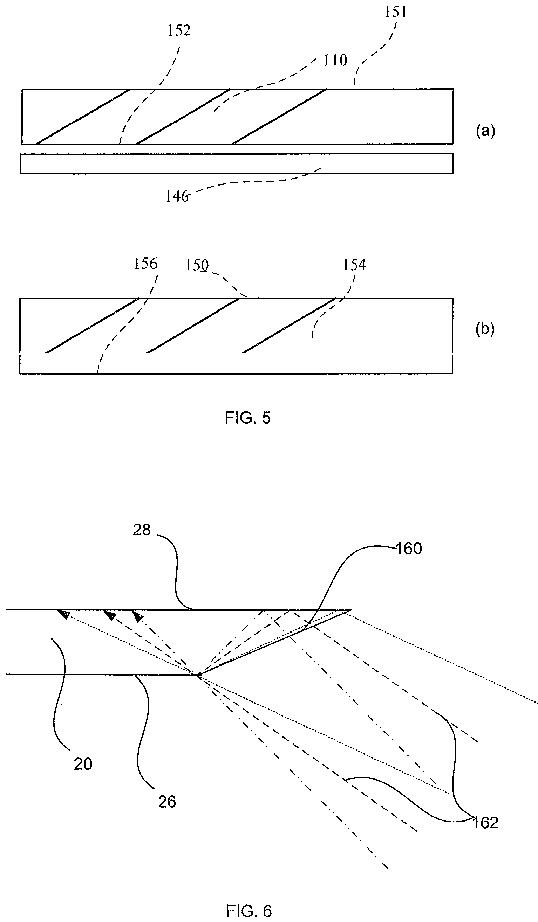

In many applications it is required, from optical as well as mechanical reasons, to add a blank flat plate at the major surfaces of the LOE. Fig. 5 illustrates a method, applicable to each of the fabrication methods described with reference to Figs. 2 and 4(a) to 4(e) in which a blank plate 146 Fig. 5(a) is optically attached to one of the major surfaces of the substrate 110, so as to form an LOE 150 Fig. 5(b) with the appropriate active apertures for all of the reflecting surfaces. There are applications in which it is required that the LOE 110 will have a wedge structure, namely, surfaces 151 and 152 are not parallel. In such a case it is strictly required that the two external major surfaces 154 and 155, of the final LOE 150, will be parallel to each other.

In the embodiment illustrated in Fig. 1, the light waves are coupled into the LOE through the major surface 26. There are configurations, however, wherein it is preferred that the light will be coupled into the LOE through a slanted edge of the LOE. Fig. 6 illustrates an alternative method of coupling light waves into the substrate through one of its edges. Here, the light waves-transmitting substrate 20 has two major parallel surfaces and edges, wherein at least one edge 160 is oriented at an oblique angle with respect to the major surfaces. Usually the incoming collimated light waves coupled directly from the air or alternatively a collimating module (not shown), can be optically attached to the LOE. As a result, it is advantageous to couple the central wave 162 normal to the slanted surface 162 to minimize chromatic aberrations. From various optical reasons which are extensively explained in Israeli Patent Application 235642, this requirement cannot be fulfilled by coupling the light directly through surface 160.

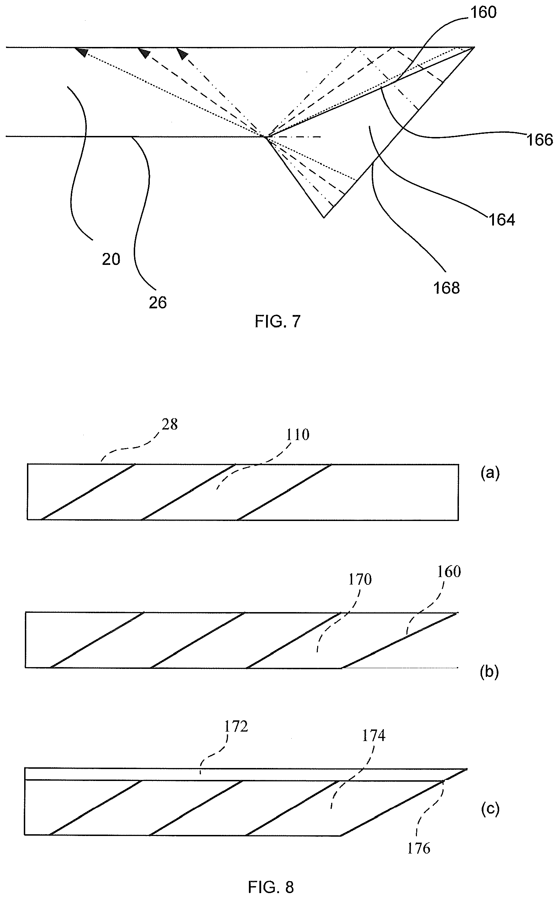

A method for solving this problem is illustrated in Fig. 7. An intermediate prism 164 is inserted between the collimating module (not shown) and the slanted edge 160 of the substrate, wherein one of its surfaces 166 is located next to the said slanted edge 160. In most cases the refractive index of the intermediate prism should be similar to that of the LOE. Nevertheless, there are cases wherein a different refractive index may be chosen for the prism, for compensating for chromatic aberrations in the system. As described above, the incoming collimated light waves are coupled directly from the air, or alternatively, the collimating module (not shown) can be attached to the intermediate prism 164. In many cases the refractive index of the collimating module is substantially different than that of the LOE, and accordingly is different than that of the prism. Therefore, In order to minimize the chromatic aberrations, the input surface 168 of the prism 164 should be oriented substantially normal to the central wave 162 (Fig. 6).

A method for fabricating the required LOE with the slanted edge is illustrated in Fig. 8. Here, one of the side edges of the un-slanted LOE 110, which was fabricated according to the procedures described with references to Figs. 2 and 4 (a), is cut to create the required slanted edge 160 (b), the new surface is then processed by grinding and polishing to achieved the required optical quality. In a case that a thin layer 172 is optically attached to the upper surface 28, according to the procedure illustrated in Fig. 5, the final LOE 174 assumes the shape illustrated in Fig. 8(c).

The apparent method to achieve the optical attachment between the various optical elements in Figs. 2, 4(a)-4(e), 5(a) and (b) and 7 is by applying an optical adhesive between the plates. However, this method might suffer from some severe drawbacks. First of all, as explained above with reference to Fig. 1, the parallelism between the partially reflecting surfaces 22 should be very high. This can be achieved by assuring that the parallelism between the external surfaces of the coated plates 102 (Fig. 2a) will have the same required degree of parallelism. However, the cement layer between the attached plates might have some degree of wedge that will create a finite angle between two adjacent coated surfaces. This undesired effect can be minimized by pressing together the attached plates during the cementing procedure in order to ensure that the thickness of each cement layer in not more than a few microns, however, even with this procedure the cemented LOE suffers from other drawbacks. The cementing lines which are located at the intersections between the cemented and the external surfaces usually cause scattering and diffraction effects which deteriorate the optical quality of the image. This phenomenon is even more apparent for the cementing line 176 which is located in the slanted edge 160 wherein all the light waves cross while coupling into the LOE. In addition, after the cementing procedure it is not possible to increase the temperature of the LOE over 60-70 degrees centigrade. This prevents, for example, hot coatings of the LOE. Hence, when such AR or hard coatings are needed, it is required to perform a special cold coating procedure, which is much more complicated and limited than the regular hot coating procedure. Furthermore, the refractive index of the adhesive, located between the cemented plates should be with very close proximity to that of the plates, in order to avoid undesired reflections. Since the variation of the refractive index of existing optical adhesive is very limited, especially for relatively high indices, the number of optical glass materials that can be utilized for fabricating LOEs is very limited as well.

As a result of the above description it will be advantageous to utilize optical attachment processes to attach the optical elements without utilization of optical adhesives. One of the candidates to materialize the adhesive-free procedure is the an anodic bonding process. Anodic bonding is a method of hermetically and permanently joining glass to glass without the use of adhesives. Using a thin film of Silicon or Silica as the intermedia layer, the intermedia layer is applied on the glass substrate by sputtering or E-beam evaporation. The glass plates are pressed together and heated to a temperature (typically in the range 300-500 degrees centigrade depending on the glass type) at which the alkali-metal ions in the glass become mobile. The components are brought into contact and a high voltage applied across them. This causes the alkali cations to migrate from the interface resulting in a depletion layer with high electric field strength. The resulting electrostatic attraction brings the Silica and glass into intimate contact. Further current flow of the oxygen anions from the glass to the Silica results in an anodic reaction at the interface and the result is that the glass becomes bonded to the Silica layer with a permanent chemical bond. The typical bond strength is between 10 and 20 MPa according to pull tests, higher than the fracture strength of glass. The bonding time varies between few minutes to few hours - depending on bonding area, glass type, glass thickness, and other parameters. The procedure of anodic bonding can be repeated, and hence, it can be utilized in the iterative procedure that creating a stack of glass plates as illustrated in Figs. 2 and 4(a)-(4e).

Since part of the optically attached surfaces is covered with partially reflecting coatings, it is important to validate that the reflectance properties of the partially reflecting surfaces will not be damaged during the anodic bonding procedure. This can be done, for example, by a proper design of the external layer of the thin film coating to ensure that after the Anodic bonding process, which might change the final thickness of this layer, the reflectance properties of the coating will be as required.

In addition to solving the problems of the above-described adhesive process, the proposed attaching process allows the chemical strengthening of the outside surfaces of the LOE and hence enabling scratch resistance and hardness of the element (like in gorilla glass). Chemically strengthened glass is a type of glass that has increased strength as a result of a post-production chemical process. When broken, it still shatters in long pointed splinters similar to float glass. For this reason, it is not considered a safety glass and must be laminated if a safety glass is required. However, chemically strengthened glass is typically six to eight times the strength of float glass. The glass is chemically strengthened by a surface finishing process. Glass is submersed in a bath containing a potassium salt (typically potassium nitrate) at 300°C. This causes sodium ions in the glass surface to be replaced by potassium ions from the bath solution. These potassium ions are larger than the sodium ions and therefore wedge into the gaps left by the smaller sodium ions when they migrate to the potassium nitrate solution. This replacement of ions causes the surface of the glass to be in a state of compression and the core in compensating tension. The surface compression of chemically strengthened glass may reach up to 690 MPa. There also exists a more advanced two-stage process for making chemically strengthened glass, in which the glass article is first immersed in a sodium nitrate bath at 450 °C, which enriches the surface with sodium ions. This leaves more sodium ions on the glass for the immersion in potassium nitrate to replace with potassium ions. In this way, the use of a sodium nitrate bath increases the potential for surface compression in the finished article. Chemical strengthening results in a strengthening similar to toughened glass. However, the process does not use extreme variations of temperature and therefore chemically strengthened glass has little or no bow or warp, optical distortion or strain pattern. This differs from toughened glass, in which slender pieces can be significantly bowed. An LOE which is fabricated utilizing anodic bonding process and strengthened by a chemically protection procedure will have much better optical, as well as mechanical properties than LOEs which are fabricated with the existing fabrication processes.

## Claims

1. A method for fabricating an optical device comprising:
a light waves-transmitting substrate (20, 110) having at least two major surfaces and edges and a plurality of partially reflecting surfaces (22) carried by the substrate, wherein the partially reflecting surfaces are parallel to each other and not parallel to any of the edges of the substrate, the method comprising the steps of:
providing at least one transparent flat plate and plates having partially reflecting surfaces;
optically attaching together the flat plates so as to create a stacked, staggered form (136);
slicing off from the stacked, staggered form at least one segment by cutting across several plates;
grinding and polishing the segment to produce the light waves-transmitting substrate, **characterized in that**:
the plates are optically attached to each other by an optically adhesive-free process,
and **in that** the light waves-transmitting substrate is chemically strengthened by a surface finishing process.

2. The method as claimed in claim 1, wherein the attachment process is effected by an anodic bonding process.

3. The method as claimed in any preceding claim, wherein at least one of the plurality of plates with partially reflecting surfaces is coated by a thin-film dielectric coating.

4. The method as claimed in any preceding claim, wherein at least one of the plurality of plates has a partially reflecting anisotropic surface.

5. The method as claimed in any preceding claim, wherein at least two of the plurality of plates have at least one partially reflective surface.

6. The method as claimed in any preceding claim, wherein at least two of the segments are sliced off from the stacked form.

7. The method as claimed in any preceding claim, wherein a partially reflecting surface is fabricated directly onto the surface of at least one of the transparent flat plates prior to the optical attachment.

8. The method as claimed in any preceding claim, further comprising cementing a blank plate to at least one of the major surfaces of the substrate, and forming two external major surfaces of the substrate.

9. The method as claimed in claim 8, wherein after the cementing, the two external major surfaces are parallel to each other.

10. The method as claimed in any preceding claim, further comprising cutting one of the side surfaces of the substrates for forming a slanted edge of the substrate.

11. The method as claimed in any preceding claim, further comprising cutting at least one of the segments to at least two sub segments creating at least two separated substrates.

12. The method as claimed in any preceding claim, wherein the surface finishing process includes replacement of sodium ions by potassium ions by immersion in a heated bath containing a potassium salt.

13. The method as claimed in any preceding claim, further comprising cementing to the substrate an optical means for coupling light into the substrate by total internal reflection.

14. The method as claimed in claim 13, wherein the optical means is a prism and wherein one of the surfaces of the prism is located next to the slanted edge of the substrate.

15. The method as claimed in any preceding claim, wherein a coating is applied to at least one of the major surfaces of the substrate.

16. The method as claimed in any preceding claim, further comprising attaching at least one lens to at least one of the major surface of the substrate.

17. The method as claimed in any preceding claim, wherein the plates are pressed together during the attachment process.

18. An optical device comprising:
a light waves-transmitting substrate (20) having at least two major surfaces and edges and a plurality of partially reflecting surfaces (22) carried by the substrate, wherein the partially reflecting surfaces are parallel to each other and not parallel to any of the edges of the substrate,
**characterised in that** the light waves-transmitting substrate is formed from at least one transparent flat plate and a plurality of plates having partially reflecting surfaces optically attached to each other by an optically adhesive-free process,
and **in that** the light waves-transmitting substrate is chemically strengthened by a surface finishing process.

## Patentansprüche

1. Verfahren zum Herstellen einer optischen Vorrichtung, umfassend:
ein Lichtwellen transmittierendes Substrat (20, 110), aufweisend wenigstens zwei Hauptoberflächen und Kanten und mehrere teilweise reflektierende Oberflächen (22), die durch das Substrat getragen werden, wobei die teilweise reflektierenden Oberflächen parallel zueinander und nicht parallel zu beliebigen der Kanten des Substrats sind, wobei das Verfahren die folgenden Schritte umfasst:
Bereitstellen von wenigstens einer transparenten flachen Platte und Platten, die teilweise reflektierende Oberflächen aufweisen;
optisches Zusammenfügen der flachen Platten, um eine gestapelte, versetzte Form (136) zu erzeugen;
Abschneiden wenigstens eines Segments von der gestapelten, versetzten Form durch Schneiden über mehrere Platten hinweg;
Schleifen und Polieren des Segments, um das Lichtwellen transmittierende Substrat anzufertigen,
**dadurch gekennzeichnet, dass**:
die Platten durch einen Vorgang frei von optischem Klebstoff optisch zusammengefügt werden,
und dadurch, dass das Lichtwellen transmittierende Substrat durch einen Oberflächenveredelungsvorgang chemisch verstärkt wird.

2. Verfahren nach Anspruch 1, wobei der Anfügungsvorgang durch einen Vorgang anodischen Bondens bewirkt wird.

3. Verfahren nach einem der vorhergehenden Ansprüche, wobei wenigstens eine der mehreren Platten mit teilweise reflektierenden Oberflächen durch eine dielektrische Dünnfilmbeschichtung beschichtet wird.

4. Verfahren nach einem der vorhergehenden Ansprüche, wobei wenigstens eine der mehreren Platten eine teilweise reflektierende anisotrope Oberfläche aufweist.

5. Verfahren nach einem der vorhergehenden Ansprüche, wobei wenigstens zwei der mehreren Platten wenigstens eine teilweise reflektierende Oberfläche aufweisen.

6. Verfahren nach einem der vorhergehenden Ansprüche, wobei wenigstens zwei der Segmente von der gestapelten Form abgeschnitten werden.

7. Verfahren nach einem der vorhergehenden Ansprüche, wobei eine teilweise reflektierende Oberfläche direkt auf die Oberfläche von wenigstens einer der transparenten flachen Platten vor der optischen Anfügung hergestellt wird.

8. Verfahren nach einem der vorhergehenden Ansprüche, ferner umfassend ein Kitten einer Rohlingsplatte auf wenigstens eine der Hauptoberflächen des Substrats und ein Ausbilden von zwei äußeren Hauptoberflächen des Substrats.

9. Verfahren nach Anspruch 8, wobei nach dem Kitten die zwei äußeren Hauptflächen parallel zueinander sind.

10. Verfahren nach einem der vorhergehenden Ansprüche, ferner umfassend das Schneiden einer der Seitenoberflächen der Substrate zum Ausbilden einer schrägen Kante des Substrats.

11. Verfahren nach einem der vorhergehenden Ansprüche, ferner umfassend das Schneiden wenigstens eines der Segmente in wenigstens zwei Untersegmente, wodurch wenigstens zwei getrennte Substrate erzeugt werden.

12. Verfahren nach einem der vorhergehenden Ansprüche, wobei der Oberflächenveredelungsvorgang einen Austausch von Natriumionen durch Kaliumionen durch Eintauchen in ein ein Kaliumsalz enthaltendes Heizbad beinhaltet.

13. Verfahren nach einem der vorhergehenden Ansprüche, ferner umfassend das Kitten eines optischen Mittels zum Einkoppeln von Licht in das Substrat durch Totalreflexion auf das Substrat.

14. Verfahren nach Anspruch 13, wobei das optische Mittel ein Prisma ist und wobei sich eine der Oberflächen des Prismas neben der schrägen Kante des Substrats befindet.

15. Verfahren nach einem der vorhergehenden Ansprüche, wobei eine Beschichtung auf wenigstens eine der Hauptoberflächen des Substrats aufgebracht wird.

16. Verfahren nach einem der vorhergehenden Ansprüche, ferner umfassend das Zusammenfügen wenigstens einer Linse mit wenigstens einer der Hauptoberflächen des Substrats.

17. Verfahren nach einem der vorhergehenden Ansprüche, wobei die Platten während des Anfügungsvorgangs zusammengepresst werden.

18. Optische Vorrichtung, umfassend:
ein Lichtwellen transmittierendes Substrat (20), aufweisend wenigstens zwei Hauptoberflächen und Kanten und mehrere teilweise reflektierende Oberflächen (22), die durch das Substrat getragen werden, wobei die teilweise reflektierenden Oberflächen parallel zueinander und nicht parallel zu beliebigen der Kanten des Substrats sind,
**dadurch gekennzeichnet, dass** das Lichtwellen transmittierende Substrat aus wenigstens einer transparenten flachen Platte und mehreren Platten, die teilweise reflektierende Oberflächen aufweisen, die durch einen Vorgang frei von optischem Klebstoff optisch zusammengefügt werden, ausgebildet ist,
und dadurch, dass das Lichtwellen transmittierende Substrat durch einen Oberflächenveredelungsvorgang chemisch verstärkt wird.

## Revendications

1. Procédé permettant de fabriquer un dispositif optique comprenant :
un substrat transmettant des ondes lumineuses (20, 110) ayant au moins deux surfaces et bords principaux et une pluralité de surfaces partiellement réfléchissantes (22) portées par le substrat, dans lequel les surfaces partiellement réfléchissantes sont parallèles les unes aux autres et non parallèles à l'un quelconque des bords du substrat, le procédé comprenant les étapes consistant à :
fournir au moins une plaque plate transparente et des plaques ayant des surfaces partiellement réfléchissantes ;
fixer optiquement les plaques plates les unes aux autres de manière à créer une forme empilée et échelonnée (136) ;
trancher de la forme empilée et échelonnée au moins un segment en coupant à travers plusieurs plaques ;
meuler et polir le segment pour produire le substrat transmettant des ondes lumineuses, **caractérisé en ce que** :
les plaques sont fixées optiquement les unes aux autres par un processus optiquement exempt d'adhésif,
et **en ce que** le substrat transmettant des ondes lumineuses est chimiquement renforcé par un processus de finition de surface.

2. Procédé selon la revendication 1, dans lequel le processus de fixation est effectué par un processus de liaison anodique.

3. Procédé selon l'une quelconque des revendications précédentes, dans lequel au moins l'une de la pluralité de plaques avec des surfaces partiellement réfléchissantes est revêtue d'un revêtement diélectrique en film mince.

4. Procédé selon l'une quelconque des revendications précédentes, dans lequel au moins l'une de la pluralité de plaques a une surface anisotrope partiellement réfléchissante.

5. Procédé selon l'une quelconque des revendications précédentes, dans lequel au moins deux de la pluralité de plaques ont au moins une surface partiellement réfléchissante.

6. Procédé selon l'une quelconque des revendications précédentes, dans lequel au moins deux des segments sont tranchés de la forme empilée.

7. Procédé selon l'une quelconque des revendications précédentes, dans lequel une surface partiellement réfléchissante est fabriquée directement sur la surface d'au moins l'une des plaques plates transparentes avant la fixation optique.

8. Procédé selon l'une quelconque des revendications précédentes, comprenant en outre le collage d'une plaque vierge sur au moins l'une des surfaces principales du substrat, et la formation de deux surfaces principales externes du substrat.

9. Procédé selon la revendication 8, dans lequel, après le collage, les deux surfaces principales externes sont parallèles l'une à l'autre.

10. Procédé selon l'une quelconque des revendications précédentes, comprenant en outre la coupe d'une des surfaces latérales des substrats afin de former un bord incliné du substrat.

11. Procédé selon l'une quelconque des revendications précédentes, comprenant en outre la coupe d'au moins l'un des segments en au moins deux sous-segments créant au moins deux substrats séparés.

12. Procédé selon l'une quelconque des revendications précédentes, dans lequel le processus de finition de surface comporte le remplacement d'ions sodium par des ions potassium par immersion dans un bain chauffé contenant un sel de potassium.

13. Procédé selon l'une quelconque des revendications précédentes, comprenant en outre le collage au substrat d'un moyen optique permettant de coupler la lumière dans le substrat par réflexion interne totale.

14. Procédé selon la revendication 13, dans lequel le moyen optique est un prisme et dans lequel l'une des surfaces du prisme est située à côté du bord incliné du substrat.

15. Procédé selon l'une quelconque des revendications précédentes, dans lequel un revêtement est appliqué sur au moins l'une des surfaces principales du substrat.

16. Procédé selon l'une quelconque des revendications précédentes, comprenant en outre la fixation d'au moins une lentille à au moins l'une des surfaces principales du substrat.

17. Procédé selon l'une quelconque des revendications précédentes, dans lequel les plaques sont pressées ensemble pendant le processus de fixation.

18. Dispositif optique comprenant :
un substrat transmettant des ondes lumineuses (20) ayant au moins deux surfaces et bords principaux et une pluralité de surfaces partiellement réfléchissantes (22) portées par le substrat, dans lequel les surfaces partiellement réfléchissantes sont parallèles les unes aux autres et non parallèles à l'un quelconque des bords du substrat,
**caractérisé en ce que** le substrat transmettant des ondes lumineuses est formé à partir d'au moins une plaque plate transparente et d'une pluralité de plaques ayant des surfaces partiellement réfléchissantes fixées optiquement les unes aux autres par un processus optiquement exempt d'adhésif,
et **en ce que** le substrat transmettant des ondes lumineuses est chimiquement renforcé par un processus de finition de surface.
